# EUROPEAN PATENT APPLICATION

(11) **EP 4 801 024 A1**
(43) Date of publication of application: **02.09.2026**
(21) Application number: 24909371.7
(22) Date of filing: 05.02.2024
(51) Int. Cl.: H04N 5/84, H04N 1/195

(54) **DECODING METHOD BASED ON TWO-DIMENSIONAL IMAGE DATA READ BY AREA-SCAN IMAGING MOBILE PLATFORM**

(30) Priority: 26.12.2023 CN 202311810486
(71) Applicant: China Hualu Group Co., Ltd., Dalian, Liaoning 116000 (CN)
(72) Inventor: ZHANG, Yong, Dalian, Liaoning 116000 (CN); LUO, Cuihua, Dalian, Liaoning 116000 (CN); WU, Zhe, Dalian, Liaoning 116000 (CN); TAI, Yasuhiro, Dalian, Liaoning 116000 (CN); ZHANG, Jijun, Dalian, Liaoning 116000 (CN); SUN, Yang, Dalian, Liaoning 116000 (CN); LIU, Yue, Dalian, Liaoning 116000 (CN); KONG, Weicheng, Dalian, Liaoning 116000 (CN); WANG, Zhangwei, Dalian, Liaoning 116000 (CN); DU, Jian, Dalian, Liaoning 116000 (CN); LUO, Sili, Dalian, Liaoning 116000 (CN); ZHAO, Min, Dalian, Liaoning 116000 (CN); ZHANG, Jiali, Dalian, Liaoning 116000 (CN); LIAO, Minghui, Dalian, Liaoning 116000 (CN)
(74) Representative: JD&P Patent Attorneys Joanna Dargiewicz & Partners
(86) International application number: PCT/CN2024/075939
(87) International publication number: WO 2025/138399

(57) **Abstract**

The present invention discloses a decoding method based on two-dimensional (2D) image data read by an area-imaging moving platform. It is a optical storage signal processing method suitable for 2D frame data based on the Viterbi algorithm. By utilizing the 2D data matrix corresponding to the 2D image frames acquired by the area-imaging moving platform, the reading of 2D data is conveniently realized. During the decoding process, the influence of already decoded rows on the data being decoded can be eliminated based on the 2D partial response matrix. This solves the problem that when reading high-density information surfaces, since the read focus spot is much larger than the shortest mark signal length, inter-symbol interference and inter-track interference occur between the read signals, resulting in a convolution effect. The method accurately restores the information data recorded in the images obtained by the area-imaging technology and improves the accuracy of restoring 2D frame information data under the conditions of crosstalk and noise.

## Description

### Technical Field

The present invention relates to the technical field of optical storage signal processing, and more particularly to a decoding method for two-dimensional image data read based on an area-imaging mobile platform.

### Background Art

The rapid development of big data and artificial intelligence technologies has left traditional big data storage technologies based on magnetic storage facing severe bottlenecks in energy consumption, capacity, and service life. The evolution of the recording format of optical disc storage, from the initial CD to BD, adopts the shortening of laser wavelength and the increase of numerical aperture (NA) of the focusing objective lens. This continuously reduces the diameter of the focused light spot of the laser beam, improves optical resolution, and simultaneously reduces the track pitch of the optical disc and the length of the shortest mark signal, thereby increasing the recording density.

In traditional optical information signal processing technologies, serial reading of single-channel recorded data has always been adopted. Isolation tracks are arranged between each recorded data channel, and decoding is performed row by row according to the single channel. The corresponding PRML (Partial Response Maximum Likelihood) technology mainly solves inter-symbol interference to achieve correct decoding. However, after the advent of BD (with a single disc capacity of 25 GB), this technical route has approached its limit. The serial reading method restricts the improvement of reading speed, and the serial reading speed is thus limited.

To achieve high-density storage and high-speed reading of larger-capacity information data, in addition to reducing the inter-symbol distance, it is also necessary to reduce the channel spacing. For example, data is recorded in a lattice pattern, and parallel reading is adopted for high-speed data retrieval. To achieve stable and accurate decoding, area-imaging technology is used to acquire images of the recording medium, and image data is extracted to obtain two-dimensional frame data. However, during the reading of high-density information surfaces, since the focused light spot used for reading is much larger than the length of the shortest mark signal, the read signal is two-dimensional and subject to greater interference. Moreover, the computational complexity of the two-dimensional PRML algorithm is the square of that of the one-dimensional algorithm, which increases the difficulty of decoding and results in low accuracy of technical information data recovery.

### Summary of the Invention

The present invention provides a decoding method for two-dimensional image data read based on an area-imaging mobile platform to overcome the above-mentioned technical problems.

To achieve the above objective, the technical solution of the present invention is as follows:
A decoding method for two-dimensional image data read based on an area-imaging mobile platform, comprising the following steps:
S1: Acquire a two-dimensional image of recorded data in a recording medium with recorded data through an area-imaging mobile platform, so as to obtain a Page image corresponding to the recording page (Page) in the recording format of the recording medium; the area-imaging mobile platform includes an area mobile platform and an area-imaging device;
S2: Perform preprocessing on the Page image to obtain a two-dimensional data matrix based on the pixel values of the image, thereby acquiring a two-dimensional data matrix after matrix reduction processing;
The number of elements in the rows and columns of the two-dimensional data matrix after matrix reduction processing is equal to the number of recording dots (dot) in the rows and columns of the recording medium;
S3: Based on the two-dimensional data matrix after matrix reduction processing and the initial parameter matrix W_{C×D} of C rows and D columns (as set), obtain the optimal parameter matrix ${W}_{C \times D}^{′}$; use this matrix to update the pixel values of elements in the two-dimensional data matrix after matrix reduction processing, thereby acquiring the updated two-dimensional data matrix after matrix reduction processing;
S4: Select a two-dimensional partial response matrix PRₖ with k₁ rows and k₂ columns; based on the Viterbi algorithm, decode the pixel values of elements in rows $1 ∼ \left⌊\frac{{k}_{1}}{2}\right⌋$ of the updated two-dimensional data matrix after matrix reduction processing; where k₁≥2, k₂≥2;
S5: When the row number t of the updated two-dimensional data matrix after matrix reduction processing is greater than $\left⌊\frac{{k}_{1}}{2}\right⌋$, obtain the final decoded value of the element at the t-th row and q-th column in the updated two-dimensional data matrix *SZ*' after matrix reduction processing based on the decoded pixel values of elements in rows $1 ∼ \left⌊\frac{{k}_{1}}{2}\right⌋$ and the two-dimensional partial response matrix PRₖ ; decode the pixel values of elements in rows $\left⌈\frac{{k}_{1}}{2}\right⌉ ∼ T$ of the updated two-dimensional data matrix after matrix reduction processing in sequence according to the raster scanning order, so as to complete the decoding of the recorded data in the recording medium; where T is the number of recording dots (dot) in the rows of the recording medium.

Beneficial Effects: The decoding method for two-dimensional image data read based on an area-imaging mobile platform of the present invention is an optical storage signal processing method suitable for two-dimensional frame data based on the Viterbi algorithm. It realizes convenient reading of two-dimensional data through the two-dimensional data matrix corresponding to the two-dimensional image frame acquired by the area-imaging mobile platform. During the decoding process, it can eliminate the influence of already decoded rows on the data being decoded based on the two-dimensional partial response matrix, thus solving the problem of convolution effect caused by inter-symbol crosstalk and inter-track crosstalk between read signals when reading high-density information surfaces, where the read focused light spot is much larger than the length of the shortest mark signal. It restores the information data recorded in the image acquired by the area-imaging technology with high precision and improves the recovery accuracy of two-dimensional frame information data under the conditions of crosstalk and noise.

### Description of Figures

To more clearly illustrate the embodiments of the present invention or the technical solutions in the prior art, a brief introduction will be given below to the figures required for describing the embodiments or the prior art. Obviously, the figures in the following description are some embodiments of the present invention. For those of ordinary skill in the art, other figures can also be obtained based on these figures without exerting creative labor.
Fig. 1 is a flowchart of the data decoding method of the present invention;
Fig. 2 is a schematic diagram of a data recording format suitable for two-dimensional image frame data in an embodiment of the present invention;
Fig. 3 is a schematic diagram of a marker bit area when calculating an offset in an embodiment of the present invention;
Fig. 4 is a schematic diagram of correction processing for a two-dimensional data matrix in an embodiment of the present invention;
Fig. 5 is a schematic diagram of rotation offset processing for a two-dimensional data matrix in an embodiment of the present invention;
Fig. 6 is a schematic diagram of matrix reduction processing for a two-dimensional data matrix in an embodiment of the present invention;
Fig. 7 is a state transition diagram of the novel two-dimensional Viterbi algorithm in an embodiment of the present invention;
Fig. 8 is a schematic diagram of a decoding process for two-dimensional image frame data in an embodiment of the present invention;
Fig. 9 is a schematic diagram of an area-imaging mobile platform in an embodiment of the present invention.

### Detailed Implementation Mode

To make the objectives, technical solutions, and advantages of the embodiments of the present invention clearer, the technical solutions in the embodiments of the present invention will be described clearly and completely below in conjunction with the accompanying drawings in the embodiments of the present invention. Obviously, the described embodiments are part of the embodiments of the present invention, rather than all the embodiments. Based on the embodiments of the present invention, all other embodiments obtained by those of ordinary skill in the art without making creative efforts shall fall within the protection scope of the present invention.

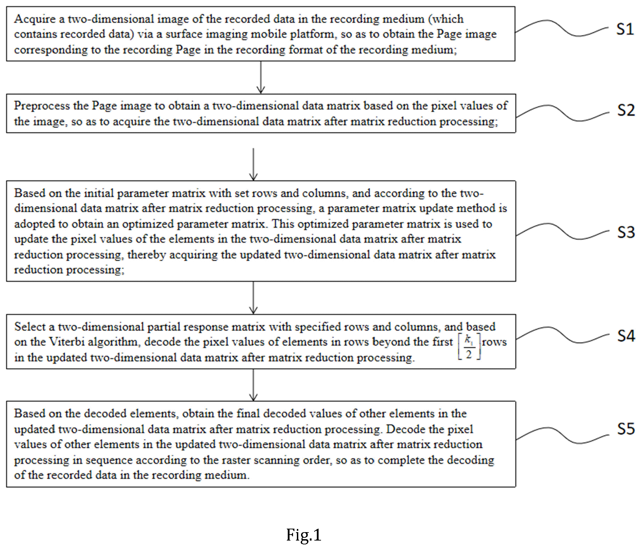

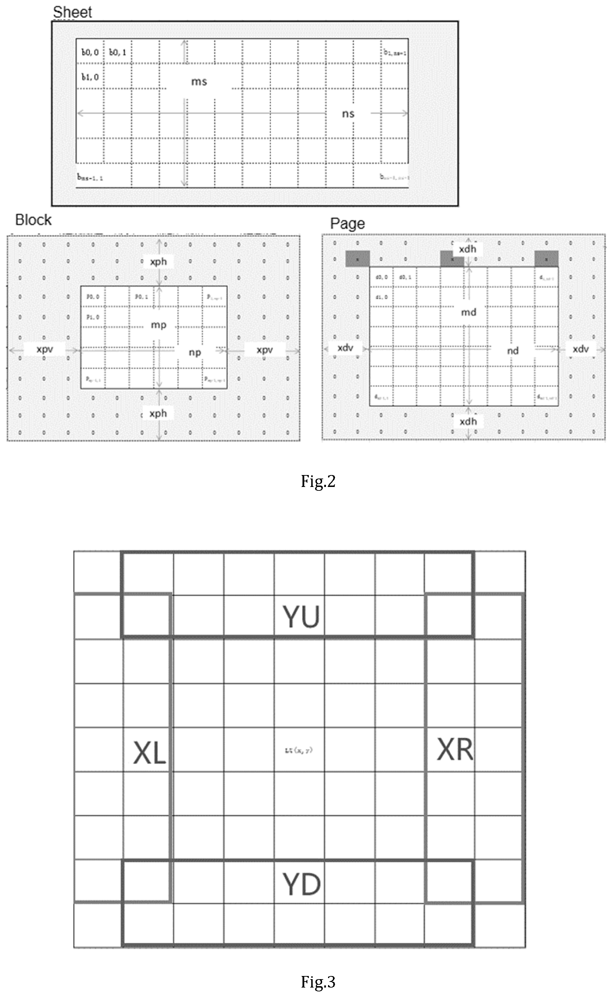

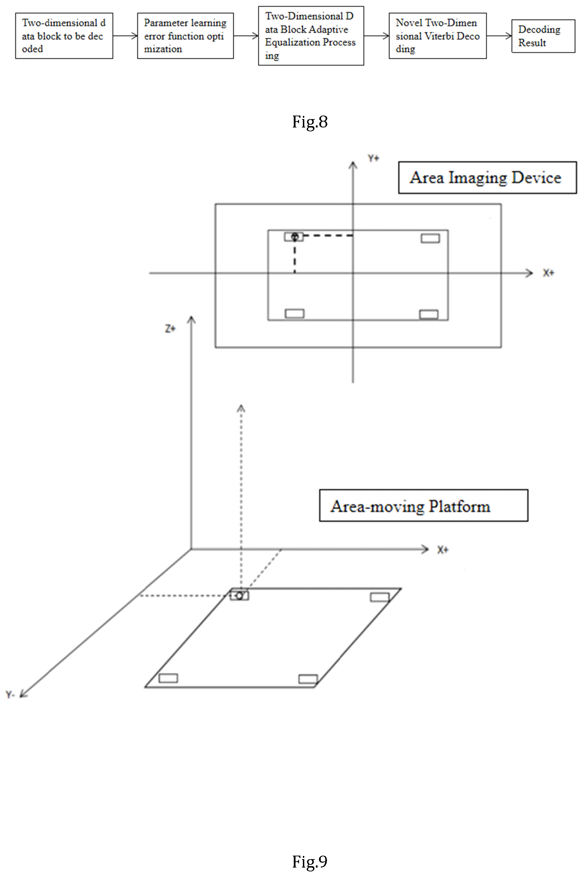

This embodiment provides a decoding method for two-dimensional image data read based on an area-imaging mobile platform. As shown in Fig. 1, it is characterized by including the following steps:
S1: Acquire a two-dimensional image of the recorded data in a recording medium with recorded data through an area-imaging mobile platform, so as to obtain a Page image corresponding to the recording page (Page) in the recording format of the recording medium; the area-imaging mobile platform includes an area mobile platform and an area-imaging device, as shown in Fig. 9;
Preferably, the recording format of the recording medium includes a number of recording medium sheets (sheet) arranged in sequence according to the raster scanning order; the recording medium sheet (sheet) includes a number of recording data blocks (Block) arranged in sequence according to the raster scanning order; the recording data block (Block) includes a number of recording pages (Page) arranged in sequence according to the raster scanning order; the recording page (Page) includes a number of recording dots (dot) arranged in sequence according to the raster scanning order;
A Page separation band is arranged between two adjacent recording pages (Page); a marker bit area and an address bit area corresponding to the marker bit area are arranged inside the Page separation band;
Specifically, as shown in Fig. 2; in this embodiment, the recording format of the recording medium with recorded data is a three-level structure:
   The first level is the recording medium sheet (sheet), and each recording medium sheet (sheet) contains a number of recording data blocks (Block);
   The second level is the recording block (Block), and each recording data block (Block) contains a number of recording pages (Page);
   The third level is the recording page (Page), and each recording page (Page) contains a number of recording dots (dot). Each recording dot (dot) records one piece of recording data; the recording data is not limited to binary data and can be multi-ary data as required.
Specifically, in this embodiment, each recording page (Page) contains dots arranged in *md* rows and *nd* columns. Two adjacent recording pages (Page) are separated by Page separation bands composed of fixed values (e.g., 0), where the separation bands have *xdv* rows and *xdh* columns respectively. The separation band includes a marker bit area and an address bit area: the marker bit area is composed of *l***w* dots arranged in *l* rows and *w* columns; the address bit area is composed of *r*s* dots arranged in *r* rows and *s* columns;
Specifically, the recording data block (Block) contains Pages arranged in *mp* rows and *np* columns. Two adjacent Blocks are separated by Block separation bands composed of fixed values (e.g., 0) with *xpv* rows and *xph* columns, where *xpv, xph* ≥ NPR (NPR is the number of PR response coefficients). A frame with a fixed response value (e.g., 0) is formed at the boundary of each Block; the recording medium sheet (sheet) contains Blocks arranged in *ms* rows and *ns* columns.
Preferably, the method for acquiring the Page image in the recording medium with recorded data is as follows:
   S11: Fix the recording medium on the area mobile platform of the area-imaging mobile platform; capture images of the recording medium through the area-imaging device of the area-imaging mobile platform to obtain initial captured images;
Specifically, in the embodiment of the present invention, the initial captured images obtained by the area-imaging device of the area-imaging mobile platform contain multiple complete recording pages (Page). Furthermore, the initial captured images contain marker bits corresponding to the multiple complete recording pages (Page); since the relative position of the marker bit to its corresponding recording page (Page) is fixed in the recording medium with recorded data, the corresponding recording page (Page) can be accurately located through the marker bit area.
S12: Based on the initial captured image, obtain the number of pixels (a) in the X-axis direction and the number of pixels (b) in the Y-axis direction of the marker bit area in the initial captured image, so as to acquire the pixel matrix *B*_{*a*×*b*} of the marker bit area;
S13: Based on the pixel matrix *B*_{*a*×*b*} of the marker bit area, obtain the defocus amount of the area-imaging device of the area-imaging mobile platform to acquire the final position coordinate of the area mobile platform on the Z-axis; then move the area mobile platform along the Z-axis direction;
Specifically, in the embodiment of the present invention, a three-dimensional coordinate system is established with the area-imaging mobile platform, where the area mobile platform can translate along the X-axis, Y-axis, and Z-axis respectively, and the area mobile platform is parallel to the XY plane of the three-dimensional coordinate system. Meanwhile, in this embodiment, it is assumed that when the recording medium is fixed on the area mobile platform of the area-imaging mobile platform, the boundaries of the Pages on the recording medium are parallel to the X-axis and Y-axis respectively.

Specifically, in this embodiment, the existing template matching algorithm is used to obtain the number of pixels (a) in the x-axis direction, the number of pixels (b) in the y-axis direction, and the pixel value of each pixel in the marker bit area; further, the pixel matrix *B*_{*a*×*b*} of the marker bit area is acquired. A two-dimensional defocus amount matrix *M*_{*am*×*bm*} that coincides with the center pixel of the pixel matrix *B*_{*a*×*b*} of the marker bit area is selected inside the pixel matrix of the marker bit area; a two-dimensional differential matrix *N*_{*an*×*bn*} that coincides with the center pixel of the pixel matrix *B*_{*a*×*b*} of the marker bit area is selected outside the matrix. The defocus amount of the area-imaging device of the area-imaging mobile platform, and the horizontal offset and vertical offset of the marker bit area are calculated respectively.

Preferably, the method for determining the final position coordinate of the area mobile platform on the Z-axis is as follows:
S131: Select a two-dimensional defocus amount matrix *M*_{*am*×}*_{bm},* where the two-dimensional defocus amount matrix *M*_{*am*×*bm*} coincides with the center pixel of the pixel matrix *B*_{*a*×*b*} of the marker bit area, and *am < a, bm* < *b;*
Among them, *am* is the number of pixels of the two-dimensional defocus amount matrix *M*_{*am*×*bm*} along the X-axis direction; *bm* is the number of pixels of the two-dimensional defocus amount matrix *M*_{*am*×*bm*} along the Y-axis direction;
S132: When the coordinate of the area mobile platform on the Z-axis is *Zₙ*, obtain the sum of pixel values of all elements in the two-dimensional defocus amount matrix *M*_{*am*×*bm*} to acquire the defocus amount of the area-imaging device of the area-imaging mobile platform, i.e., the maximum pixel value sum; where n represents the serial number of the coordinate of the area mobile platform on the Z-axis;
Specifically, the total number of coordinates of the area mobile platform on the Z-axis depends on the movement range of the area mobile platform on the Z-axis and the step size set for each movement.
Preferably, the defocus amount of the area-imaging device of the area-imaging mobile platform is obtained as follows: ${SUM}_{n} = {\sum }_{2 \leq i \leq b , 1 \leq j \leq a} \left({m}_{i , j}-{m}_{i - 1 , j}\right)$ $LJ = max \left({SUM}_{n}\right)$

Wherein: *SUMₙ* is the sum of pixel values of all elements in the two-dimensional defocus amount matrix *M*_{*am*×*bm*} when the coordinate of the area mobile platform on the Z-axis is *Zₙ*; *LJ* is the defocus amount of the area-imaging device of the area-imaging mobile platform; *m_{i,j}* is the element at the i-th row and j-th column in the two-dimensional defocus amount matrix *M*_{*am*×*hm*}; n is the serial number of the coordinate of the area mobile platform on the Z-axis. Among them, the movement of the area mobile platform along the Z-axis direction is realized by moving a set step size each time. Therefore, the coordinate on the Z-axis of the area mobile platform at each position within its movable range is fixed; each coordinate is numbered, and *"n"* is used to represent the serial number.
S133: Based on the defocus amount of the area-imaging device of the area-imaging mobile platform, obtain the final position coordinate of the area mobile platform on the Z-axis when the sum of pixel values of all elements in the two-dimensional defocus amount matrix *M*_{*am*×*bm*} reaches the maximum pixel value sum;
S134: Move the area mobile platform along the Z-axis to the final position coordinate of the area mobile platform on the Z-axis.
S14: Based on the pixel matrix *B*_{*a*×*b*} of the marker bit area, obtain the horizontal offset and vertical offset of the marker bit area to move the area mobile platform;
Preferably, the method for moving the area mobile platform is as follows:
   S141: Select a two-dimensional differential matrix *N*_{*an*×}*_{bn},* where the two-dimensional differential matrix *N*_{*an*×*bn*} coincides with the center pixel of the pixel matrix *B*_{*a*×*b*} of the marker bit area, and *an* > *a, bn > b;* among them, *bn* is the number of pixels of the two-dimensional differential matrix *N*_{*an*×*bn*} along the Y-axis direction, and *an* is the number of pixels of the two-dimensional differential matrix *N*_{*an*×*bn*} along the X-axis direction;
   S142: Based on the two-dimensional differential matrix *N*_{*an*×}*_{bn},* obtain the first horizontal offset matrix (XL), the second horizontal offset matrix (XR), the first vertical offset matrix (YU), and the second vertical offset matrix (YD); as shown in Fig. 3;
Preferably, the first horizontal offset matrix (XL), the second horizontal offset matrix (XR), the first vertical offset matrix (YU), and the second vertical offset matrix (YD) are obtained as follows:
   The first offset matrix (XL) is obtained as follows: $\left[\begin{matrix}{n}_{2 , 1} & ⋯ & {n}_{2 , xl} \\ ⋮ & ⋱ & ⋮ \\ {n}_{an - 1 , 1} & ⋯ & {n}_{an - 1 , xl}\end{matrix}\right] , 1 \leq xl \leq \left⌊\frac{bn}{2}\right⌋$
   The second horizontal offset matrix (XR) is obtained as follows: $\left[\begin{matrix}{n}_{2 , bn - xr + 1} & ⋯ & {n}_{2 , bn} \\ ⋮ & ⋱ & ⋮ \\ {n}_{an - , bn - x} & … & {n}_{an - 1 , bn}\end{matrix}\right] , \left⌈\frac{bn}{2}\right⌉ \leq xr \leq bn , and xr = xl$
   The first vertical offset matrix (YU) is obtained as follows: $\left[\begin{matrix}{n}_{1 , 2} & ⋯ & {n}_{1 , bn - 1} \\ ⋮ & ⋱ & ⋮ \\ {n}_{yu , 2} & ⋯ & {n}_{yu , bn - 1}\end{matrix}\right] , 1 \leq yu \leq \left⌊\frac{an}{2}\right⌋$
   The second vertical offset matrix (YD) is obtained as follows: $\left[\begin{matrix}{n}_{an - y , 2} & ⋯ & {n}_{an - y , bn - 1} \\ ⋮ & ⋱ & ⋮ \\ {n}_{an , 2} & ⋯ & {n}_{an , bn -}\end{matrix}\right] , \left⌈\frac{an}{2}\right⌉ \leq yd \leq an , and yd = yu$
Wherein: *n*_{2,1} represents the element in row 2 and column 1 of the two-dimensional differential matrix *N*_{*an*×*bn*}; *n_{2,xl}* represents the element in row 2 and column *xl* of the two-dimensional differential matrix *N*_{*an*×*bn*}; *xl* is the number of pixels of the first horizontal offset matrix (XL) along the X-axis direction; xr is the number of pixels of the first horizontal offset matrix (XR) along the X-axis direction, where *xr = xl*; *yu* is the number of pixels of the first vertical offset matrix (YU) along the Y-axis direction; *yd* is the number of pixels of the second vertical offset matrix (YD) along the Y-axis direction, where *yu* = *yd*;
S143: Respectively obtain the sum of pixel values of all elements in the first horizontal offset matrix (XL) (denoted as SUMXL), the sum of pixel values of all elements in the second horizontal offset matrix (XR) (denoted as SUMXR), the sum of pixel values of all elements in the first vertical offset matrix (YU) (denoted as SUMYU), and the sum of pixel values of all elements in the second vertical offset matrix (YD) (denoted as SUMYD);
S144: Move the area mobile platform according to the following method:
   When SUMXL - SUMXR > 0, move the area mobile platform in the negative direction of the X-axis until the value of SUMXL - SUMXR is less than the set horizontal offset threshold;
   When SUMXL - SUMXR < 0, move the area mobile platform in the positive direction of the X-axis until the value of SUMXL - SUMXR is less than the set horizontal offset threshold;
   When SUMYU - SUMYD > 0, move the area mobile platform in the positive direction of the Y-axis until the value of SUMYU - SUMYD is less than the set vertical offset threshold;
   When SUMYU - SUMYD < 0, move the area mobile platform in the negative direction of the Y-axis until the value of SUMYU - SUMYD is less than the set vertical offset threshold.
S15: Based on the moved area mobile platform, acquire the Page image corresponding to the recording page (Page) in the recording format and associated with the marker bit area.

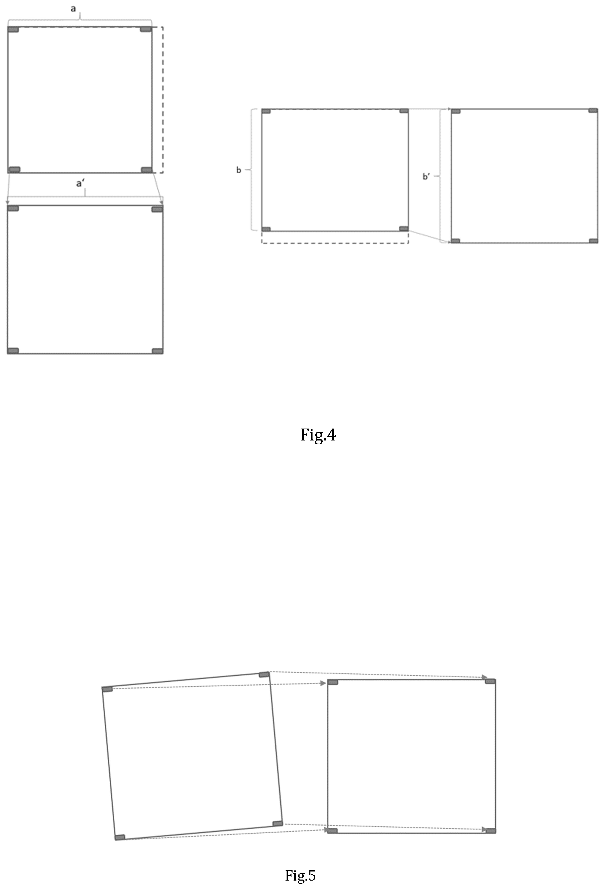

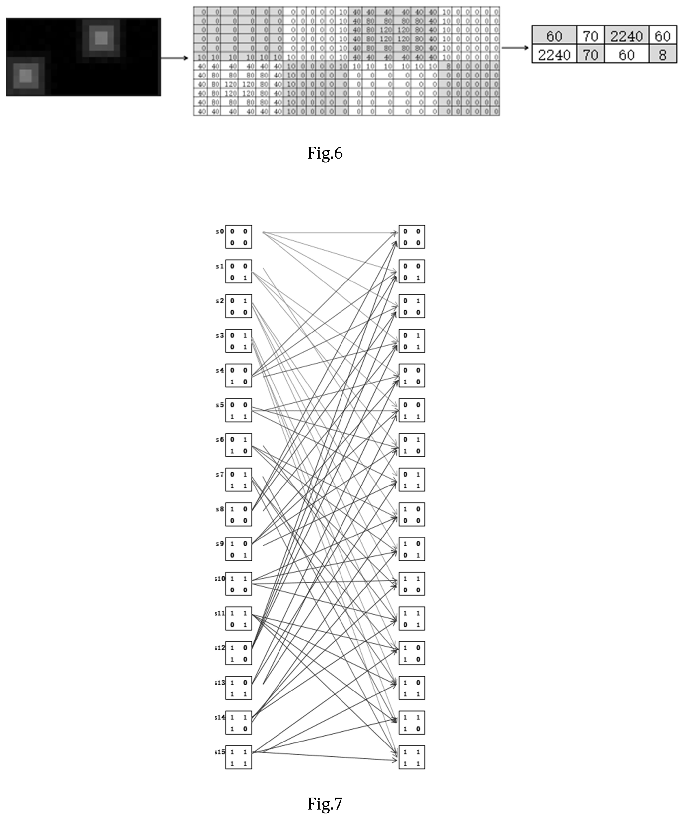

Specifically, in this embodiment, after executing steps S11 - S15, one Page image is obtained; by repeatedly executing steps S11 - S15, multiple Page images can be obtained, and finally all Page images in the recording medium can be acquired.
S2: Perform preprocessing on the Page image to obtain a two-dimensional data matrix based on the pixel values of the image, thereby acquiring a two-dimensional data matrix after matrix reduction processing; the number of elements in the rows and columns of the two-dimensional data matrix after matrix reduction processing is equal to the number of recording dots (dot) in the rows and columns of the recording medium;
Specifically, based on the Page image, a two-dimensional data matrix of the pixel values in the image can be obtained using existing methods;
S21: Perform a rotation operation on the two-dimensional data matrix, as shown in Fig. 5, so that the recording dots (dot) in the Page image are parallel to the X-axis and Y-axis respectively, thereby acquiring the two-dimensional data matrix after the rotation operation;
Specifically, the method for performing the rotation operation on the two-dimensional data matrix is an existing technology, and will not be described in detail here;
S22: Perform a correction operation on the two-dimensional data matrix after the rotation operation, as shown in Fig. 4, so that the number of elements in the rows and columns of the two-dimensional data matrix after the rotation operation is equal to the set number of elements in rows and the set number of elements in columns, so as to obtain the two-dimensional data matrix after the correction operation;
Specifically, due to factors such as recording errors, shooting errors, and Page image interception errors, it is difficult for the actually acquired Page image to have an ideal size. In an ideal state, a single Page image should contain recording dots (dot) arranged in *Pᵢₚ* rows and *Pⱼₚ* columns. If a single recording dot (dot) in the recording medium occupies pₓ rows and qₓ columns of pixels in the captured image, the ideal size of the two-dimensional data matrix would be *Pᵢₚ* × *pₓ* rows and *Pⱼₚ* × *qₓ* columns. Therefore, it is necessary to perform a correction operation on the two-dimensional data matrix after the rotation operation to make it reach the ideal size. Specifically, the method for performing the correction operation on the two-dimensional data matrix after the rotation operation is to scale it through row-wise and column-wise resampling respectively. In this embodiment, the method for performing the correction operation on the two-dimensional data matrix after the rotation operation is an existing technology, and only its application is involved here, so it will not be described in detail.
S23: For the two-dimensional data matrix after the correction operation, subtract the average value of the pixel values of the unrecorded data area in the recording medium from the pixel value of each element in the matrix, so as to obtain the two-dimensional data matrix after DC component removal;
S24: Based on the address bits, fuse the two-dimensional data matrices after DC component removal to obtain a fused two-dimensional data matrix;
Specifically, according to the recording order of the address bits in the Page, splice multiple two-dimensional data matrices after DC component removal; the spliced two-dimensional data matrices after DC component removal are the fused two-dimensional data matrix.
S25: Perform matrix reduction processing on the fused two-dimensional data matrix, so that the number of elements in the rows and columns of the two-dimensional data matrix after matrix reduction processing is equal to the number of recording dots (dot) in the rows and columns of the recording medium, thereby obtaining the two-dimensional data matrix after matrix reduction processing.
Specifically, as shown in Fig. 6, in the embodiment of the present invention, it is assumed that there are dots arranged in *Jₕ* rows and *Jₗ* columns in the recording medium; the elements in the fused two-dimensional data matrix are then divided into matrix blocks with *Jₕ* rows and *Jₗ* columns according to the number of elements. Each matrix block corresponds to the element at the corresponding position in the two-dimensional data matrix after matrix reduction processing; subsequently, the sum of the pixel values of all pixels in each matrix block is calculated and used as the element in the corresponding two-dimensional data matrix after matrix reduction processing. In this way, the value of each element in the two-dimensional data matrix after matrix reduction processing can be obtained, and the final two-dimensional data matrix after matrix reduction processing is thus acquired.
S3: Based on the set initial parameter matrix *W*_{*C*×*D*} with C rows and D columns, and according to the two-dimensional data matrix after matrix reduction processing, use the parameter matrix update method to obtain the optimized parameter matrix ${W}_{C \times D}^{′}$, so as to update the element values in the two-dimensional data matrix after matrix reduction processing, thereby acquiring the updated two-dimensional data matrix after matrix reduction processing;
Preferably, the method for acquiring the updated two-dimensional data matrix after matrix reduction processing is as follows:
   S31: Set an initial parameter matrix *W*_{*C*×*D*} with C rows and D columns,
wherein the initial parameter matrix *W*_{*C*×*D*} satisfies the following conditions: ${w}_{\left⌈\frac{C}{2}\right⌉ \times \left⌈\frac{D}{2}\right⌉} ≪ {w}_{c \times 1 ′} {w}_{\left⌈\frac{C}{2}\right⌉ \times \left⌈\frac{D}{2}\right⌉} ≪ {w}_{1 \times d ′} {w}_{\left⌈\frac{C}{2}\right⌉ \times \left⌈\frac{D}{2}\right⌉} ≪ {w}_{c \times D ′} {w}_{\left⌈\frac{C}{2}\right⌉ \times \left⌈\frac{D}{2}\right⌉} ≪ {w}_{C \times d}$;
Wherein: ${w}_{\left⌈\frac{C}{2}\right⌉ \times \left⌈\frac{D}{2}\right⌉}$ represents the value of the element in row $\left⌈\frac{C}{2}\right⌉$ and column $\left⌈\frac{D}{2}\right⌉$ of the initial parameter matrix W_{*C*×*D*}, and it is also the element located at the center position of the initial parameter matrix; "«" represents the "much smaller than" symbol; w_{*c*×1} represents the value of the element in the first column of the initial parameter matrix *W*_{*C*×*D*}; *w*_{1×*d*} represents the value of the element in the first row of the initial parameter matrix *W*_{*C*×*D*}; *w*_{*c*×*D*} represents the value of the element in the D-th column of the initial parameter matrix *W*_{*C*×*D*}; *w*_{*C*×*d*} represents the value of the element in the C-th row of the initial parameter matrix *W*_{*C*×*D*}; c represents the row number of the initial parameter matrix *W*_{*C*×*D*}; d represents the column number of the initial parameter matrix *W*_{*C*×*D*}; $\left⌈⋅\right⌉$ represents the ceiling operation (rounding up);
Specifically, set the parameter matrix *W*_{*C*×*D*} , where *W*_{*C*×*D*} is a two-dimensional data matrix with a larger value at the center and smaller values at the edges;
S32: Based on the two-dimensional data matrix after matrix reduction processing and the initial parameter matrix *W*_{*C*×}*_{D},* obtain the optimized parameter matrix W' using the parameter matrix update method;
Preferably, the parameter matrix update method is as follows:
   S321: With the element *SZ*^{1,1} (at row 1, column 1) in the two-dimensional data matrix SZ after matrix reduction processing as the center, select a reference matrix block *CSZ*^{1,1} that has the same size as the initial parameter matrix;
Specifically, in this embodiment, for positions in the selected reference matrix block that do not belong to elements of the two-dimensional data matrix *SZ* after matrix reduction processing, the corresponding element values are set to 0.
S322: Based on the reference matrix block *CSZ*^{1,1} and the initial parameter matrix (W), obtain the intermediate calculation matrix ${WC}_{C \times D}^{1 , 1}$ corresponding to *CS*: ${WC}_{C \times D}^{1 , 1} = {W}_{C \times D} \times {CSZ}^{1 , 1}$
Wherein: *CSZ*^{1,1} represents the reference matrix block, which is centered at the element *SZ*^{1,1} (at row 1, column 1) in the two-dimensional data matrix *SZ* after matrix reduction processing and has the same size as the initial parameter matrix; ${WC}_{C \times D}^{1 , 1}$ is the intermediate calculation matrix corresponding to *CSZ*^{1,1};
S323: Obtain the sum of the values of all elements in the intermediate calculation matrix : $y = {\sum }_{c = 1}^{C} {\sum }_{d = 1}^{D} {wc}_{c \times d}^{1 , 1}$
Wherein: ${wc}_{c \times d}^{1 , 1}$ represents the value of the element at row [c] and column [d] in the intermediate calculation matrix WC corresponding to *CSZ*^{1,1};
S324: Obtain the updated parameter matrix *W*₁; ${W}_{1} = W + α \times {CSZ}^{1 , 1} \times \left(E\left({SZ}^{1 , 1}\right)-y\right)$
Wherein: *W*₁ is the updated parameter matrix; *α* is an empirical coefficient; *E*(*SZ*^{1,1}) is the expected value of the pixel value of the element *SZ*^{1,1} (at row 1, column 1) in the two-dimensional data matrix *SZ* after matrix reduction processing;

S325: If *E*(*SZ*^{1*,*1})- *y* > the set convergence value, sequentially perform steps S321-S324 on the elements in the two-dimensional data matrix *SZ* after matrix reduction processing in a raster scanning order, until *E*(*SZ*^{1,1})- *y* ≤ the set convergence value. The updated parameter matrix obtained at this point is the optimized parameter matrix ${W}_{C \times D}^{′}$; *E*(*SZ^{t,q}*) represents the expected value of the pixel value of the element *SZ^{t,q}* (at row t, column q) in the two-dimensional data matrix *SZ* after matrix reduction processing.

Specifically, in the embodiment of the present invention, starting from the element at row 1, column 1 of the two-dimensional data matrix *SZ* after matrix reduction processing, processing is performed sequentially in a raster scanning order. A reference matrix block with the same size as the initial parameter matrix is selected and multiplied by the initial parameter matrix to obtain an intermediate calculation matrix. Furthermore, the sum of the values of all elements in the intermediate calculation matrix is obtained, and the initial parameter matrix is updated accordingly.

S33: With the element at row [t] and column [q] in the two-dimensional data matrix SZ after matrix reduction processing as the center, obtain a reference matrix block *CSZ^{t,q}* that has the same size as the initial parameter matrix;

Wherein: t is the row number of the two-dimensional data matrix *SZ* after matrix reduction processing, and also the row number of the two-dimensional data matrix after matrix reduction processing, *t* = 1, ..., *T*; q is the column number of the two-dimensional data matrix after matrix reduction processing, and also the column number of the two-dimensional data matrix after matrix reduction processing,, *q* = 1, ..., *Q*; *T* is the number of recording dots (dot) in the rows of the recording medium, i.e., the number of recording dots (dot) in the rows of the two-dimensional data matrix *SZ* after matrix reduction processing; *Q* is the number of recording dots (dot) in the columns of the recording medium, i.e., the number of recording dots (dot) in the columns of the two-dimensional data matrix *SZ* after matrix reduction processing;
S34: Based on the optimized parameter matrix ${W}_{C \times D}^{′}$ , obtain the intermediate calculation matrix ${WC}_{C \times D}^{t , q}$ corresponding to *CSZ^{t,q}*; ${WC}_{C \times D}^{t , q} = {W}_{C \times D}^{′} \times {CSZ}^{t , q}$
Wherein: *CSZ^{t,q}* represents the reference matrix block, which is centered at the element (at row t, column q) in the two-dimensional data matrix *SZ* after matrix reduction processing and has the same size as the optimized parameter matrix; ${WC}_{C \times D}^{t , q}$ is the intermediate calculation matrix corresponding to *CSZ^{t,q}*;
S35: Obtain the sum of the pixel values of all elements in the intermediate calculation matrix corresponding to *CSZ^{t,q}*; update the value of the element at row t, column q in the two-dimensional data matrix *SZ* after matrix reduction processing to acquire the updated two-dimensional data matrix *SZ*' after matrix reduction processing; simultaneously, update the optimized parameter matrix using the parameter matrix update method. ${y}^{t , q} = {\sum }_{c = 1}^{C} {\sum }_{d = 1}^{D} {wc}_{C \times D}^{t , q}$
Wherein: ${wc}_{C \times D}^{t , q}$ represents the value of the element at row [c] and column [d] in the intermediate calculation matrix ${WC}_{C \times D}^{t , q}$ corresponding to *CSZ^{t,q}*; *y^{t,q}*represents the value of the element at row t, column q in the updated two-dimensional data matrix after matrix reduction processing;
After matrix reduction processing, the updated two-dimensional data matrix $SZ ′ = \left[\begin{matrix}{y}^{1 , 1} & ⋯ & {y}^{1 , Q} \\ ⋮ & ⋱ & ⋮ \\ {y}^{T , 1} & ⋯ & {y}^{T , Q}\end{matrix}\right]$
S4: Select a two-dimensional partial response matrix PRₖ with k₁ row and k₂ column to decode the pixel values of elements in rows $1 ∼ \left⌊\frac{{k}_{1}}{2}\right⌋$ of the updated two-dimensional data matrix *(SZ')* after matrix reduction processing based on the Viterbi algorithm;

Specifically, select a two-dimensional partial response matrix PRₖ , which is a two-dimensional data matrix with a size of k₁ rows and k₂ columns (where k₁ , k₂ ≥ 2). The two-dimensional partial response matrix is a set value that can be adjusted according to the optical characteristics of the recording light spot and the pixel conditions of the recording marks in the captured photos. The values in PRₖ can be symmetrically distributed, or can adopt an asymmetric distribution form according to the optical characteristics of the recording light spot and the captured photos. Decoding the pixel values of elements in rows $1 ∼ \left⌊\frac{{k}_{1}}{2}\right⌋$ of the updated two-dimensional data matrix *(SZ')* after matrix reduction processing based on the Viterbi algorithm is an application of existing technologies, and will not be described in detail here.

S5: When the row number t of the updated two-dimensional data matrix after matrix reduction processing is greater than $\left⌊\frac{{k}_{1}}{2}\right⌋$, obtain the final decoded value of the element at row t, column q in the updated two-dimensional data matrix SZ' after matrix reduction processing based on the decoded elements in rows 1 to [n] and the two-dimensional partial response matrix PRₖ ; then, sequentially decode the pixel values of the elements in rows $\left⌈\frac{{k}_{1}}{2}\right⌉ ∼ T$ of the updated two-dimensional data matrix after matrix reduction processing in a raster scanning order, thereby completing the decoding of the recorded data in the recording medium; where T is the number of recording dots (dot) in the columns of the recording medium.

Preferably, the method for obtaining the final decoded value of the element at row t, column q in the updated two-dimensional data matrix SZ' after matrix reduction processing is as follows:
S51: Multiply the element values in rows $1 ∼ \left⌊\frac{{k}_{1}}{2}\right⌋$ of the two-dimensional partial response matrix PRₖ by the decoded values of the elements in rows $1 ∼ \left⌊\frac{{k}_{1}}{2}\right⌋$ of the updated two-dimensional data matrix *SZ*' after matrix reduction processing to obtain a decoding intermediate matrix *J*'; $J ′ = \left[\begin{matrix}{PR}_{{k}_{1}} \\ ⋮ \\ {PR}_{{k}_{\left⌊\frac{{k}_{1}}{2}\right⌋}}\end{matrix}\right] \times \left[\begin{matrix}{y}^{t - \left⌊\frac{{k}_{1}}{2}\right⌋ , q - \left⌊\frac{{k}_{2}}{2}\right⌋} & … & {y}^{t - \left⌊\frac{{k}_{1}}{2}\right⌋ , q + \left⌊\frac{{k}_{2}}{2}\right⌋} \\ {y}^{t - \left⌊\frac{{k}_{1}}{2}\right⌋ + 1 , q - \left⌊\frac{{k}_{2}}{2}\right⌋} & & {y}^{t - \left⌊\frac{{k}_{1}}{2}\right⌋ + 1 , q + \left⌊\frac{{k}_{2}}{2}\right⌋} \\ ⋮ & ⋱ & ⋮ \\ {y}^{t - 1 , q - \left⌊\frac{{k}_{2}}{2}\right⌋} & … & {y}^{t - 1 , q + \left⌊\frac{{k}_{2}}{2}\right⌋}\end{matrix}\right]$

Wherein: *PR*_{*k*₁} represents the element in row 1 of the two-dimensional partial response matrix *PRₖ*; ${PR}_{{k}_{\left⌊\frac{{k}_{1}}{2}\right⌋}}$ represents the element in row $\left⌊\frac{{k}_{1}}{2}\right⌋$ of the two-dimensional partial response matrix (*PR_{K}*); ${y}^{t - \left⌊\frac{{k}_{1}}{2}\right⌋ , q - \left⌊\frac{{k}_{2}}{2}\right⌋}$ represents the decoded value of the element at row $t - \left⌊\frac{{k}_{1}}{2}\right⌋$, column $q - \left⌊\frac{{k}_{2}}{2}\right⌋$ in the updated two-dimensional data matrix *SZ*' after matrix reduction processing; ${y}^{t - 1 , q + \left⌊\frac{{k}_{2}}{2}\right⌋}$ represents the decoded value of the element at row *t* - 1, column $q + \left⌊\frac{{k}_{2}}{2}\right⌋$ in the updated two-dimensional data matrix *SZ*' after matrix reduction processing; $\left⌊⋅\right⌋$denotes the floor operation.
S52: Obtain the sum *SUMJ'* of all element values in the decoding intermediate matrix *J'*;
S53: Obtain the final value to be decoded *J_{t,q} - SUMJ'* of the element at row t, column q in the updated two-dimensional data matrix *SZ'* after matrix reduction processing;
Wherein: *J_{t,q}* is the pixel value of the element at row t, column q in the updated two-dimensional data matrix *SZ'* after matrix reduction processing;
S54: Based on the Viterbi algorithm, decode the final value to be decoded of the element at row t, column q in the updated two-dimensional data matrix *SZ*' after matrix reduction processing, and obtain the final decoded value of the element at row t, column q in the updated two-dimensional data matrix *SZ*' after matrix reduction processing.

Specifically, in this embodiment, the pixel values in rows $\left⌈\frac{{k}_{1}}{2}\right⌉ ∼ T$ of the updated two-dimensional data matrix *(SZ)* after matrix reduction processing are decoded row by row and point by point. First, calculate the influence value of the first $\left⌊\frac{{k}_{1}}{2}\right⌋$ rows on the point to be decoded, i.e., the sum *SUMJ'* of all element values in the decoding intermediate matrix *J*'. Then, subtract this sum from the value to be decoded to obtain the final decoded value. This method can eliminate the influence of the first $\left⌊\frac{{k}_{1}}{2}\right⌋$rows on the decoded value.

Specifically, create a two-dimensional partial response matrix model PRₖ. PRₖ is a two-dimensional matrix with a size of k₁*k₂ (where k₁, k₂≥2). Theoretically, the size of this partial response model matrix can be any number. For the convenience of explanation, the following example uses k=3: ${PR}_{3} = \left(\begin{matrix}1 , & 2 , & 1 \\ 2 , & 4 , & 2 \\ 1 , & 2 , & 1\end{matrix}\right)$

In this implementation, the matrix data has a symmetric structure. In practical applications, the data in the matrix can also have an asymmetric data structure according to the optical characteristics of the recording light spot and the captured photos.

If the conventional Viterbi algorithm is used, there are 2^{k1*k2} (k₁, k₂≥2) possible transition states for PRₖ (where k₁, k₂≥2). To simplify the algorithm and eliminate the influence of the first n rows (n ≥ 1) in the PRₖ model, the number of possible transition states can be reduced to 2 ^{(k-n)} * ^{(k-n)} (n ≥ 1), which significantly reduces the computational load.

As an example, set k=3 and n=1. Create a state transition diagram according to $\left[\begin{matrix}a 1 & b 1 \\ c 1 & d 1\end{matrix}\right]$. Here, *a*1, *b*1, *c*1, *d*1 are all binary digits. The total number of possible transition states is 2⁴=16, and each state is as follows:

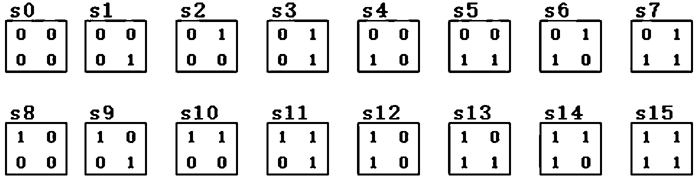

Each state has four possible transition states. For example, if the current state is $\left(\begin{matrix}0 & 0 \\ 0 & 0\end{matrix}\right)$, the next state may be one of 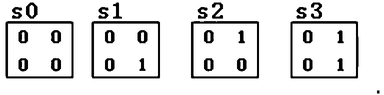 Based on this state transition relationship, a state transition diagram of the two-dimensional Viterbi algorithm for the two-dimensional matrix model (PRₖ) can be drawn. When k=3, the state transition diagram is drawn as shown in Figure 7.

As shown in Figure 8, first perform parameter matrix learning: set an initial parameter matrix W, select a set of feature blocks containing marker bits from the Block to be decoded, split them into two-dimensional reference matrix blocks by row, perform convolution operations between the reference matrix blocks and the initial parameter matrix, compare the results with ideal data to obtain error data, input the error data into an error function to update the parameter matrix, and continue the above learning process. In the convolution operations, use the updated parameter matrix until the optimal parameter matrix W' is obtained.

Novel two-dimensional Viterbi decoding: Perform novel two-dimensional Viterbi decoding on the updated two-dimensional data matrix after matrix reduction processing. Before decoding, it is necessary to perform crosstalk elimination processing, that is, eliminate the crosstalk influence of the first $\left⌊\frac{{k}_{1}}{2}\right⌋$ rows $\left(\left⌊\frac{{k}_{1}}{2}\right⌋\geq 1\right)$ on the current row. Then, split the updated two-dimensional data matrix after matrix reduction processing into a sequence of two-dimensional data matrices with a size of k₁*k₂ (k₁, k₂ ≥ 2) by row. For each element in the sequence, compare it with each state in combination with the state transition diagram of the novel two-dimensional Viterbi algorithm to obtain the best-matching combination and get the decoded data.

A decoding method for two-dimensional image data read by a surface imaging mobile platform in this embodiment is a optical storage signal processing method suitable for two-dimensional frame data based on the Viterbi algorithm. It realizes convenient reading of two-dimensional data through the two-dimensional data matrix corresponding to the two-dimensional image frames acquired by the surface imaging mobile platform. During the decoding process, it can eliminate the influence of already decoded rows on the data being decoded based on the two-dimensional partial response matrix, which greatly simplifies the decoding algorithm. It solves the problem of convolution effect caused by inter-symbol crosstalk and inter-track crosstalk between read signals when reading high-density information surfaces, where the read focused light spot is much larger than the shortest mark signal length. It restores the information data recorded in the images acquired by the surface imaging technology with high precision, and improves the accuracy of restoring two-dimensional frame information data under the conditions of crosstalk and noise. The high-precision restoration of the recorded information data solves the problem of improving the accuracy of two-dimensional frame information data restoration under the conditions of crosstalk and noise.

Finally, it should be noted that the above embodiments are only used to illustrate the technical solutions of the utility model, rather than limiting them; although the utility model has been described in detail with reference to the foregoing embodiments, those of ordinary skill in the art should understand that: they can still modify the technical solutions recorded in the foregoing embodiments, or equivalently replace some or all of the technical features therein; and these modifications or replacements do not make the essence of the corresponding technical solutions deviate from the scope of the technical solutions of the embodiments of the utility model.

## Claims

1. , A decoding method based on two-dimensional image data read by a surface imaging mobile platform, **characterized by** comprising the following steps:
S1: Obtain a two-dimensional image of the recorded data in the recording medium with recorded data through the surface imaging mobile platform to acquire the Page image corresponding to the recording page (Page) in the recording format of the recording medium; the surface imaging mobile platform includes a surface mobile platform and a surface imaging device;
S2: Preprocess the Page image to obtain a two-dimensional data matrix based on the pixel values of the image, so as to obtain the two-dimensional data matrix after matrix reduction processing;
The number of elements in the rows and columns of the two-dimensional data matrix after matrix reduction processing is equal to the number of recording dots (dot) in the rows and columns of the recording medium;
S3: According to the two-dimensional data matrix after matrix reduction processing and the parameter matrix update method, obtain an optimized parameter matrix ${W}_{C \times D}^{′}$ based on the set initial parameter matrix *W*_{*C*×*D*} of rows C and columns *D* , so as to update the pixel values of the elements in the two-dimensional data matrix after matrix reduction processing and obtain the updated two-dimensional data matrix after matrix reduction processing;
S4: Select the two-dimensional partial response matrix PRₖ of rows k₁ and columns k₂, and decode the pixel values of elements in rows $1 ∼ \left⌊\frac{{k}_{1}}{2}\right⌋$ to of the updated two-dimensional data matrix after matrix reduction processing based on the Viterbi algorithm; where k₁ ≥ 2 and k₂ ≥ 2;
S5: When the row number $t > \left⌊\frac{{k}_{1}}{2}\right⌋$ of the updated two-dimensional data matrix after matrix reduction processing is greater than , obtain the final decoded value of the element in row t and column q of the updated two-dimensional data matrix *SZ*' after matrix reduction processing based on the decoded elements in rows $1 ∼ \left⌊\frac{{k}_{1}}{2}\right⌋$ to and the two-dimensional partial response matrix PRₖ ; decode the pixel values of elements in rows to $\left⌈\frac{{k}_{1}}{2}\right⌉ ∼ T$ of the updated two-dimensional data matrix after matrix reduction processing in sequence according to the order of raster scanning, so as to complete the decoding of the recorded data in the recording medium; where T is the number of record dots in the columns of the recording medium.

2. , A decoding method for two-dimensional image data read based on a surface-imaging mobile platform as claimed in Claim 1, **characterized in that** the method for obtaining the finally decoded value of the element at the t row and q column in the updated two-dimensional data matrix *SZ'* after matrix reduction processing is as follows:
S51: Multiply the element values of the $1 ∼ \left⌊\frac{{k}_{1}}{2}\right⌋$ rows of the two-dimensional partial response matrix PRₖ by the decoded values of the elements of the $1 ∼ \left⌊\frac{{k}_{1}}{2}\right⌋$ rows in the updated two-dimensional data matrix SZ' after matrix reduction processing to obtain a decoding intermediate matrix J'; $J ′ = \left[\begin{matrix}{PR}_{{k}_{1}} \\ ⋮ \\ {PR}_{{k}_{\left⌊\frac{{k}_{1}}{2}\right⌋}}\end{matrix}\right] \times \left[\begin{matrix}{y}^{t - \left⌊\frac{{k}_{1}}{2}\right⌋ , q - \left⌊\frac{{k}_{2}}{2}\right⌋} & … & {y}^{t - \left⌊\frac{{k}_{1}}{2}\right⌋ , q + \left⌊\frac{{k}_{2}}{2}\right⌋} \\ {y}^{t - \left⌊\frac{{k}_{1}}{2}\right⌋ + 1 , q - \left⌊\frac{{k}_{2}}{2}\right⌋} & & {y}^{t - \left⌊\frac{{k}_{1}}{2}\right⌋ + 1 , q + \left⌊\frac{{k}_{2}}{2}\right⌋} \\ ⋮ & ⋱ & ⋮ \\ {y}^{t - 1 , q - \left⌊\frac{{k}_{2}}{2}\right⌋} & ⋯ & {y}^{t - 1 , q + \left⌊\frac{{k}_{2}}{2}\right⌋}\end{matrix}\right]$
Wherein: PR_{K} represents the element in the 1st row of the two-dimensional partial response matrix PRₖ ; ${PR}_{{k}_{\left⌊\frac{{k}_{1}}{2}\right⌋}}$ represents the element in the $\left⌊\frac{{k}_{1}}{2}\right⌋ - th$ row of the two-dimensional partial response matrix PRₖ ; ${y}^{t - \left⌊\frac{{k}_{1}}{2}\right⌋ , q - \left⌊\frac{{k}_{2}}{2}\right⌋}$ represents the decoded value of the element at the $t - \left⌊\frac{{k}_{1}}{2}\right⌋ - th$ row and $q - \left⌊\frac{{k}_{2}}{2}\right⌋ - th$ column in the updated two-dimensional data matrix *SZ*' after matrix reduction processing; ${y}^{t - 1 , q + \left⌊\frac{{k}_{2}}{2}\right⌋}$ represents the decoded value of the element at the (t-1)-th row and $q + \left⌊\frac{{k}_{2}}{2}\right⌋ - th$ column in the updated two-dimensional data matrix *SZ*' after matrix reduction processing.
S52: Obtain the sum *SUMJ'* of all element values in the decoding intermediate matrix *J*';
S53: Obtain the final value to be decoded of the element at the t-th row and q-th column in the updated two-dimensional data matrix *SZ*' after matrix reduction processing, which is *J_{t,q} - SUMJ';*
Among them, *J_{t,q}* represents the pixel value of the element at the t-th row and q-th column in the updated two-dimensional data matrix SZ' after matrix reduction processing;
S54: Based on the Viterbi algorithm, decode the final to-be-decoded value of the element at the t-th row and q-th column in the updated dimensionally reduced two-dimensional data matrix SZ', so as to obtain the final decoded value of the element at the p-th row and q-th column in the updated dimensionally reduced two-dimensional data matrix SZ'.

3. , The decoding method for two-dimensional image data read based on an area-imaging mobile platform as claimed in claim 1, **characterized in that** the recording format of the recording medium comprises a number of recording medium sheets arranged in sequence according to the raster scanning order; each recording medium sheet comprises a number of recording data blocks (Block) arranged in sequence according to the raster scanning order; each recording data block (Block) comprises a number of recording pages (Page) arranged in sequence according to the raster scanning order; each recording page (Page) comprises a number of recording dots (dot) arranged in sequence according to the raster scanning order;
A Page separation band is disposed between two adjacent said recording pages (Page); the interior of the Page separation band is provided with a marker bit and an address bit corresponding to the region of said marker bit.

4. , The decoding method for two-dimensional image data read based on an area-imaging mobile platform as claimed in claim 1, **characterized in that**, in the said S1, the method for acquiring the Page image in the recording medium with recorded data is as follows:
S11: Fix the recording medium on the area mobile platform of the area-imaging mobile platform, and capture the recording medium through the area-imaging device of the area-imaging mobile platform to obtain the initial captured image;
S12: Based on the initial captured image, obtain the number of pixels (a) along the X-axis direction and the number of pixels (b) along the Y-axis direction of the marker bit region in the initial captured image; so as to acquire the pixel matrix *B*_{*a*×*b*} of the marker bit region;
S13: Based on the pixel matrix *B*_{*a*×*b*} of the marker bit region, obtain the defocus amount of the area-imaging device of the area-imaging mobile platform to acquire the final position coordinate of the area mobile platform on the Z-axis; and move the area mobile platform along the Z-axis direction;
S14: Based on the pixel matrix *B*_{*a*×*b*} of the marker bit region, obtain the horizontal offset and vertical offset of the marker bit region to move the area mobile platform;
S15: Based on the moved area mobile platform, acquire the Page image corresponding to the recording page (Page) in the recording format, where the Page image corresponds to the marker bit region.

5. , The decoding method for two-dimensional image data read based on an area-imaging mobile platform as claimed in claim 4, **characterized in that**, in the said S13, the method for obtaining the defocus amount of the area-imaging device of the area-imaging mobile platform is as follows: ${SUM}_{n} = {\sum }_{2 \leq i \leq bm , 1 \leq j \leq am} \left({m}_{i , j}-{m}_{i - 1 , j}\right)$ $LJ = max \left({SUM}_{n}\right)$ Where: *SUMₙ* is the sum of pixel values of all elements in the two-dimensional defocus amount matrix *M*_{*am*×*bm*} when the coordinate of the area mobile platform on the Z-axis is *Zₙ*; *LJ* is the defocus amount of the area-imaging device of the area-imaging mobile platform; *m_{i,j}* is the element at the i-th row and j-th column in the two-dimensional defocus amount matrix *M*_{*am*×*bm*}; and n is the number of the coordinate of the area mobile platform on the Z-axis.

6. , The decoding method for two-dimensional image data read based on an area-imaging mobile platform as claimed in claim 5, **characterized in that**, in the said S13, the method for acquiring the final position coordinate of the area mobile platform on the Z-axis is as follows:
S131: Select a two-dimensional defocus amount matrix *M*_{*am*×*bm*}, where the two-dimensional defocus amount matrix *M*_{*am*×*bm*} coincides with the center pixel of the pixel matrix *B*_{*a*×*b*} of the marker bit region, and *am < a, bm* < *b*;
Wherein, *am* is the number of pixels of the two-dimensional defocus amount matrix *M*_{*am*×*bm*} along the X-axis direction; *bm* is the number of pixels of the two-dimensional defocus amount matrix *M*_{*am*×*bm*} along the Y-axis direction;
S132: Obtain the sum of pixel values of all elements in the two-dimensional defocus amount matrix *M*_{*am*×*bm*} when the coordinate of the area mobile platform on the Z-axis is *Zₙ*, so as to acquire the defocus amount of the area-imaging device of the area-imaging mobile platform; wherein, n represents the number of the coordinate of the area mobile platform on the Z-axis;
S133: Based on the defocus amount of the area-imaging device of the area-imaging mobile platform, obtain the final position coordinate of the area mobile platform on the Z-axis when the sum of pixel values of all elements in the two-dimensional defocus amount matrix *M*_{*am*×*bm*} reaches the maximum pixel value;
S134: Move the area mobile platform along the Z-axis to the final position coordinate of the area mobile platform on the Z-axis.

7. , The decoding method for two-dimensional image data read based on an area-imaging mobile platform as claimed in claim 4, **characterized in that**, in the said S14, the method for moving the area mobile platform is as follows:
S141: Select a two-dimensional differential matrix *N*_{*an*×*bn*} , where the two-dimensional differential matrix *N*_{*an*×*bn*} coincides with the center pixel of the pixel matrix *B*_{*a*×*b*} of the marker bit region, andan > *a, bn* > *b*; wherein, an is the number of pixels of the two-dimensional differential matrix *N*_{*an*×*bn*} along the Y-axis direction; bn is the number of pixels of the two-dimensional differential matrix *N*_{*an*×*bn*} along the X-axis direction;
S142: Based on the two-dimensional differential matrix *N*_{*an*×}*_{bn},* obtain the first horizontal offset matrix XL, the second horizontal offset matrix XR, the first vertical offset matrix YU, and the second vertical offset matrix YD;
The first offset matrix XL is obtained as follows: $\left[\begin{matrix}{n}_{2 , 1} & ⋯ & {n}_{2 , xl} \\ ⋮ & ⋱ & ⋮ \\ {n}_{an - 1 , 1} & ⋯ & {n}_{an - 1 , xl}\end{matrix}\right] , 1 \leq xl \leq \left⌊\frac{bn}{2}\right⌋$
The second horizontal offset matrix XR is obtained as follows: $\left[\begin{matrix}{n}_{2 , bn - xr + 1} & ⋯ & {n}_{2 , bn} \\ ⋮ & ⋱ & ⋮ \\ {n}_{an - 1 , bn - x} & ⋯ & {n}_{an - 1 , bn}\end{matrix}\right] , \left⌈\frac{bn}{2}\right⌉ \leq xr \leq bn , and xr = xl$
The first vertical offset matrix YU is obtained as follows: $\left[\begin{matrix}{n}_{1 , 2} & ⋯ & {n}_{1 , bn -} \\ ⋮ & ⋱ & ⋮ \\ {n}_{yu , 2} & ⋯ & {n}_{yu , bn -}\end{matrix}\right] , 1 \leq yu \leq \left⌊\frac{an}{2}\right⌋$
The second vertical offset matrix YD is obtained as follows: $\left[\begin{matrix}{n}_{an - y , 2} & ⋯ & {n}_{an - yd , bn -} \\ ⋮ & ⋱ & ⋮ \\ {n}_{an , 2} & ⋯ & {n}_{an , bn -}\end{matrix}\right] , \left⌈\frac{an}{2}\right⌉ \leq yd \leq an , and yd = yu$
Wherein: *n*_{2,1}represents the element at the 2nd row and 1st column in the two-dimensional differential matrix *N*_{*an*×*bn*}; *n*_{2,*xl*} represents the element at the 2nd row and xl-th column in the two-dimensional differential matrix *N*_{*an*×*bn*}; *xl* is the number of pixels of the first horizontal offset matrix XL along the X-axis direction; *xr* is the number of pixels of the first horizontal offset matrix XR along the X-axis direction, where *xr* = *xl*; *yu* is the number of pixels of the first vertical offset matrix YU along the Y-axis direction;*yd* is the number of pixels of the second vertical offset matrix YD along the Y-axis direction, where *yu* = *yd*;
S143: Respectively obtain the sum of pixel values of all elements in the first horizontal offset matrix XL (denoted as SUMXL), the sum of pixel values of all elements in the second horizontal offset matrix XR (denoted as SUMXR), the sum of pixel values of all elements in the first vertical offset matrix YU (denoted as SUMYU), and the sum of pixel values of all elements in the second vertical offset matrix YD (denoted as SUMYD);
S144: Move the area mobile platform, and the method is as follows:
When SUMXL - SUMXR > 0, move the area mobile platform toward the negative direction of the X-axis until the value of SUMXL - SUMXR is less than the set horizontal offset threshold;
When SUMXL - SUMXR < 0, move the area mobile platform toward the positive direction of the X-axis until the value of SUMXL - SUMXR is less than the set horizontal offset threshold;
When SUMYU - SUMYD > 0, move the area mobile platform toward the positive direction of the Y-axis until the value of SUMYU - SUMYD is less than the set vertical offset threshold;
When SUMYU - SUMYD < 0, move the area mobile platform toward the negative direction of the Y-axis until the value of SUMYU - SUMYD is less than the set vertical offset threshold.

8. , The decoding method for two-dimensional image data read based on an area-imaging mobile platform as claimed in claim 1, **characterized in that**, in the said S2, the method for obtaining the two-dimensional data matrix after matrix reduction processing is as follows:
S21: Perform a rotation operation on the two-dimensional data matrix, so that the recording dots (dot) in the Page image are parallel to the X-axis and Y-axis respectively, so as to obtain the two-dimensional data matrix after the rotation operation;
S22: Perform a correction operation on the two-dimensional data matrix after the rotation operation, so that the number of elements in the rows and columns of the two-dimensional data matrix after the rotation operation is equal to the set number of elements in a row and the set number of elements in a column, and obtain the two-dimensional data matrix after the correction operation;
S23: For the two-dimensional data matrix after the correction operation, subtract the average value of the pixel values of the area with unrecorded data in the recording medium from the pixel value of each element in the matrix, so as to obtain the two-dimensional data matrix after DC component removal;
S24: Perform fusion on the two-dimensional data matrix after DC component removal according to the address bits, and obtain the fused two-dimensional data matrix;
S25: Perform matrix reduction processing on the fused two-dimensional data matrix, so that the number of elements in the rows and columns of the two-dimensional data matrix after matrix reduction processing is equal to the number of recording dots (dot) in the rows and columns of the recording medium, and obtain the two-dimensional data matrix after matrix reduction processing.

9. , The decoding method for two-dimensional image data read based on an area-imaging mobile platform as claimed in claim 1, **characterized in that**, in the said S3, the method for obtaining the updated two-dimensional data matrix after matrix reduction processing is as follows:
S31: Set the initial parameter matrix *W*_{*C*×*D*} for rows and columns,
The initial parameter matrix *W*_{*C*×*D*} satisfies: ${w}_{\left⌈\frac{C}{2}\right⌉ \times \left⌈\frac{D}{2}\right⌉} ≪ {w}_{c \times 1} {, w}_{\left⌈\frac{C}{2}\right⌉ \times \left⌈\frac{D}{2}\right⌉} ≪ {w}_{1 \times d} {, w}_{\left⌈\frac{C}{2}\right⌉ \times \left⌈\frac{D}{2}\right⌉} ≪ {w}_{c \times D} {, w}_{\left⌈\frac{C}{2}\right⌉ \times \left⌈\frac{D}{2}\right⌉} ≪ {w}_{C \times d}$ ;
Wherein, ${w}_{\left⌈\frac{C}{2}\right⌉ \times \left⌈\frac{D}{2}\right⌉}$ represents the element value at the $\left⌈\frac{C}{2}\right⌉ - th$ row and $\left⌈\frac{D}{2}\right⌉ - th$ column in the initial parameter matrix W_{*C*×*D*}; "«" denotes the "much less than" symbol; w_{*c*×1} represents the element value in the 1st column of the initial parameter matrix *W*_{*C*×*D*}; w_{1×*d*} represents the element value in the 1st row of the initial parameter matrix W_{*C*×*D*};w_{*c*×*D*} represents the element value in the D-th column of the initial parameter matrix *W*_{*C*×*D*}; *w*_{*C*×*d*} represents the element value in the C-th row of the initial parameter matrix *w*_{*C*×*d*} ; *c* represents the row number in the initial parameter matrix *w_{C×d}*; d represents the column number in the initial parameter matrix *W*_{*C*×*D*}; " $\left⌈⋅\right⌉$" denotes the ceiling function (rounding up operation);
S32: Based on the two-dimensional data matrix after matrix reduction processing and the initial parameter matrix *W*_{*C*×*D*}, obtain the optimized parameter matrix *W'* using the parameter matrix update method;
S33: With the element at the t-th row and q-th column in the two-dimensional data matrix SZ after matrix reduction processing as the center, obtain a reference matrix block *CSZ^{t,q}* with the same size as the initial parameter matrix;
S34: Based on the optimized parameter matrix ${W}_{C \times D}^{′}$, obtain the intermediate calculation matrix ${WC}_{C \times D}^{t , q}$ corresponding to *CSZ^{t,q}* ${WC}_{C \times D}^{t , q} = {W}_{C \times D}^{′} \times {CSZ}^{t , q}$
Wherein: *CSZ^{t,q}* represents a reference matrix block that takes the element at the t-th row and q-th column in the two-dimensional data matrix SZ after matrix reduction processing as the center and has the same size as the optimized parameter matrix; ${WC}_{C \times D}^{t , q}$ is an intermediate calculation matrix corresponding to *CSZ^{t,q}*;
S35: Obtain the sum of pixel values of all elements in the intermediate calculation matrix corresponding to *CSZ^{t,q}*; update the value at the t-th row and q-th column of the two-dimensional data matrix SZ after matrix reduction processing to acquire the updated two-dimensional data matrix SZ after matrix reduction processing; meanwhile, update the optimized parameter matrix using the said parameter matrix update method; ${y}^{t , q} = {\sum }_{c = 1}^{C} {\sum }_{d = 1}^{D} {wc}_{C \times D}^{t , q}$
Wherein: ${wc}_{C \times D}^{t , q}$ represents the value of the element at the t-th row and q-th column in the corresponding intermediate calculation matrix ${WC}_{C \times D}^{t , q}$; *y^{t,q}* represents the value at the t-th row and q-th column of the updated two-dimensional data matrix after matrix reduction processing;
The updated two-dimensional data matrix after matrix reduction processing, $SZ ′ = \left[\begin{matrix}{y}^{1 , 1} & ⋯ & {y}^{1 , Q} \\ ⋮ & ⋱ & ⋮ \\ {y}^{T , 1} & ⋯ & {y}^{T , Q}\end{matrix}\right]$.

10. , The decoding method for two-dimensional image data read based on an area-imaging mobile platform as claimed in claim 1, **characterized in that**, in the said S3, the parameter matrix update method is as follows:
S321: With the element *SZ*^{1,1} (at the 1st row and 1st column in the two-dimensional data matrix *SZ* after matrix reduction processing) as the center, select a reference matrix block *CSZ*^{1,1} with the same size as the initial parameter matrix;
S322: Based on the reference matrix block and the initial parameter matrix, obtain the intermediate calculation matrix ${WC}_{C \times D}^{1 , 1}$ corresponding to *CSZ*^{1,1}: ${WC}_{C \times D}^{1 , 1} = {W}_{C \times D} \times {CSZ}^{1 , 1}$
Wherein: *CSZ*^{1,1} represents a reference matrix block that takes the element *SZ*^{1,1} (at the 1st row and 1st column in the two-dimensional data matrix *SZ* after matrix reduction processing) as the center and has the same size as the initial parameter matrix; ${WC}_{C \times D}^{1 , 1}$ is an intermediate calculation matrix corresponding to *CSZ*^{1,1};
S323: Obtain the sum of the values of all elements in the said intermediate calculation matrix: $y = {\sum }_{c = 1}^{C} {\sum }_{d = 1}^{D} {wc}_{c \times d}^{1 , 1}$
Wherein: ${wc}_{c \times d}^{1 , 1}$ represents the value of the element at the c-th row and d-th column in the intermediate calculation matrix ${WC}_{C \times D}^{1 , 1}$ corresponding to *CSZ*^{1,1};
S324: Obtain the updated parameter matrix W; ${W}_{1} = W + α \times {CSZ}^{1 , 1} \times \left(E\left({SZ}^{1 , 1}\right)-y\right)$
Wherein: *W*₁ is the updated parameter matrix; *α* is the empirical coefficient; *E*(*SZ*^{1,1}) is the expected value of the pixel value of element *SZ*^{1,1} (at the 1st row and 1st column in the two-dimensional data matrix *SZ* after matrix reduction processing);
S325: If *E*(*SZ*^{1,1})- *y* > the set convergence value, perform steps S321-S324 on the elements in the two-dimensional data matrix *SZ* after matrix reduction processing in sequence according to the raster scanning order until *E*(*SZ*^{1,1}) *- y* ≤the set convergence value; at this point, the obtained updated parameter matrix is the optimized parameter matrix ${W}_{C \times D}^{′}$; *E*(*SZ^{t,q}*) represents the expected value of the pixel value of element *SZ^{t,q}* (at the t-th row and q-th column in the two-dimensional data matrix *SZ* after matrix reduction processing).
